# EUROPEAN PATENT SPECIFICATION

(11) **EP 1 462 704 B1**
(45) Date of publication and mention of the grant of the patent: **16.05.2007**
(21) Application number: 02788823.9
(22) Date of filing: 13.12.2002
(51) Int. Cl.: F16L 27/08, F16L 39/04

(54) **ROTARY JOINT**
DREHGELENK
JOINT ROTATIF

(30) Priority: 13.12.2001 JP 2001380109
(43) Date of publication of application: 29.09.2004
(73) Proprietor: Nitta Corporation, Osaka-shi, Osaka 556-0022 (JP)
(72) Inventor: KATSUTA, Takashi, Nitta Corporation Nara Plant, Yamatokohriyama-shi, Nara 639-1032 (JP)
(74) Representative: Calderbank, Thomas Roger
(86) International application number: PCT/JP2002/013066
(87) International publication number: WO 2003/054433

(56) References cited:
- JP-A- 2000 135 568
- JP-Y2- 61 000 622
- US-A- 4 858 962

## Description

### FIELD OF THE INVENTION

The present invention relates to a rotary joint in which a rotational-side member rotates in a normal and the reverse direction with respect to a fixed-side member.

### BACKGROUND OF THE PRIOR ART

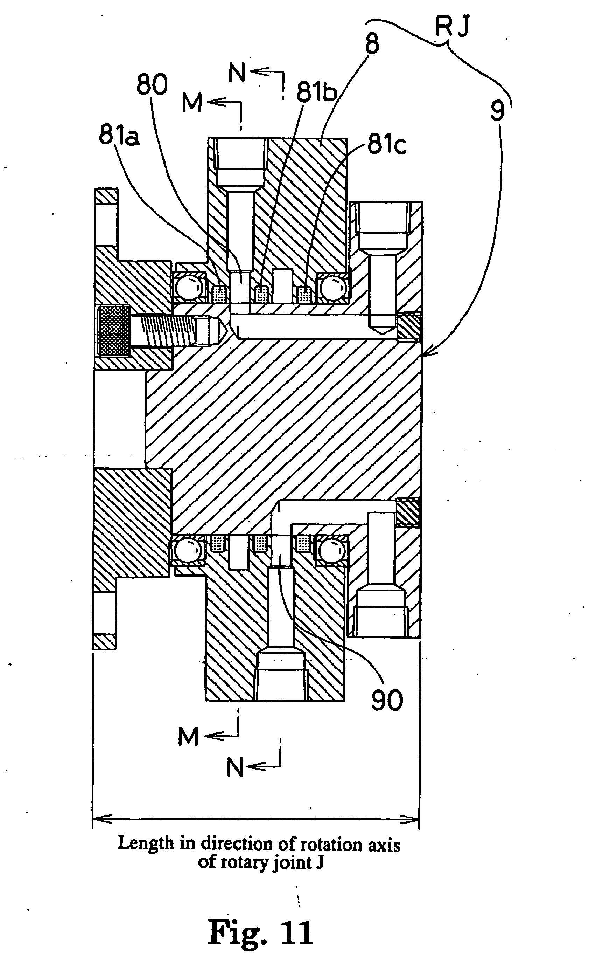

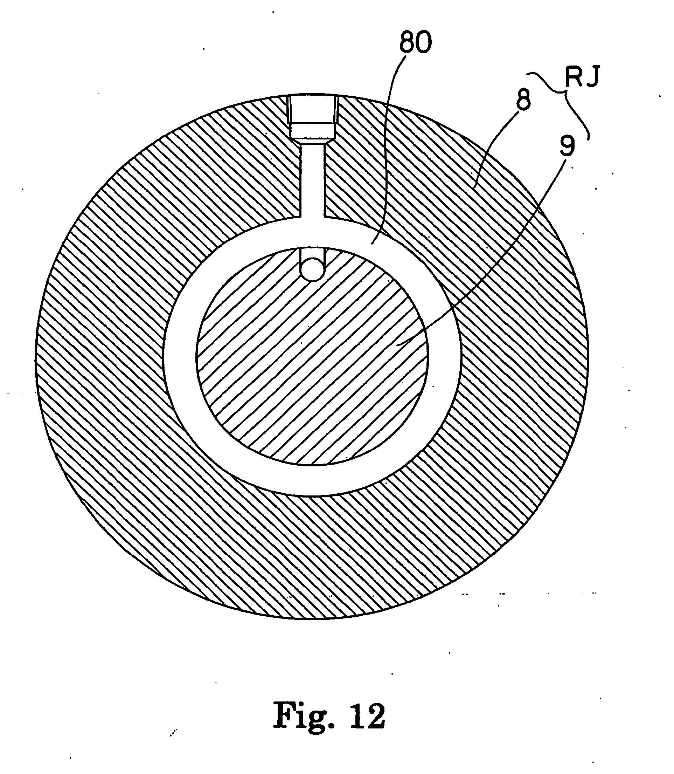

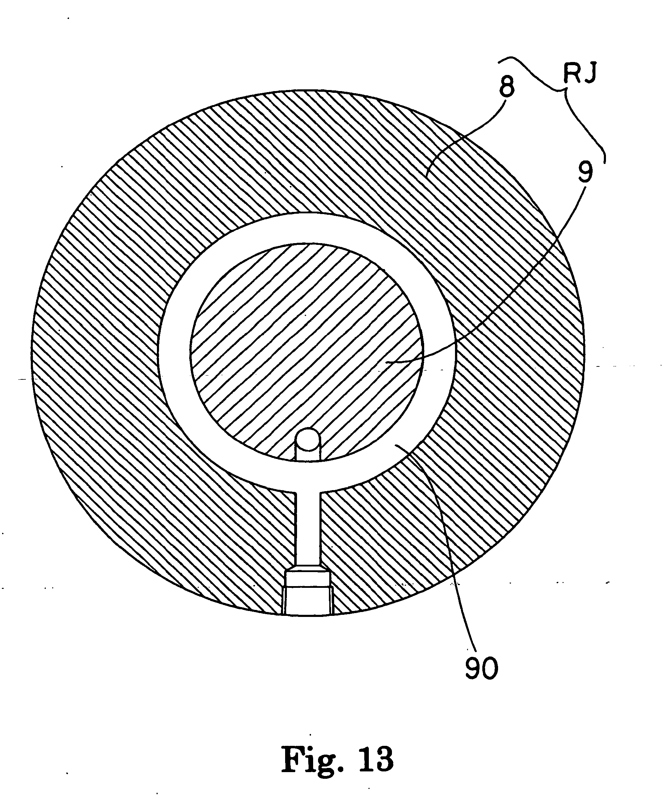

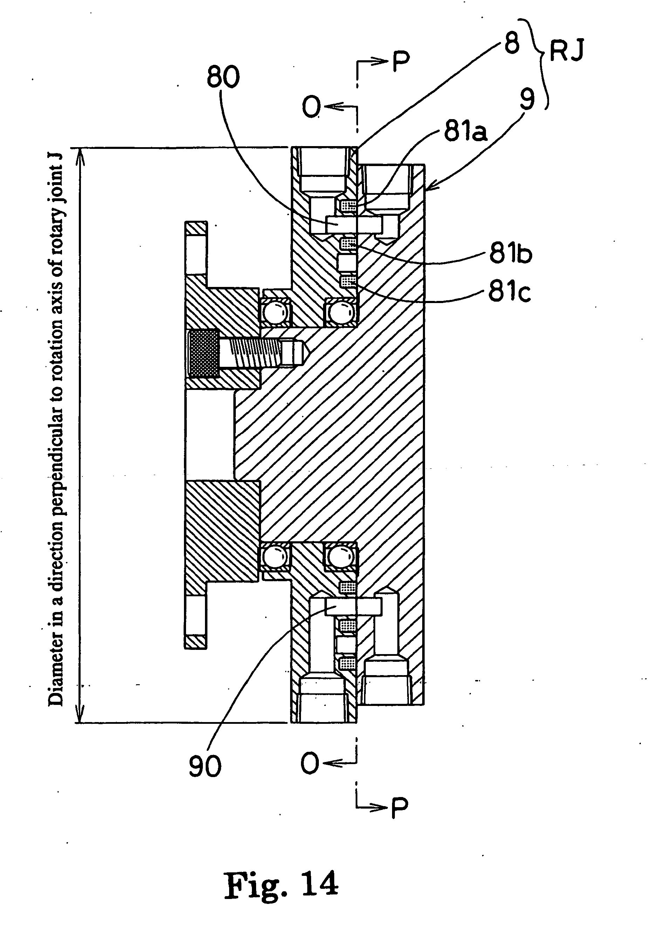

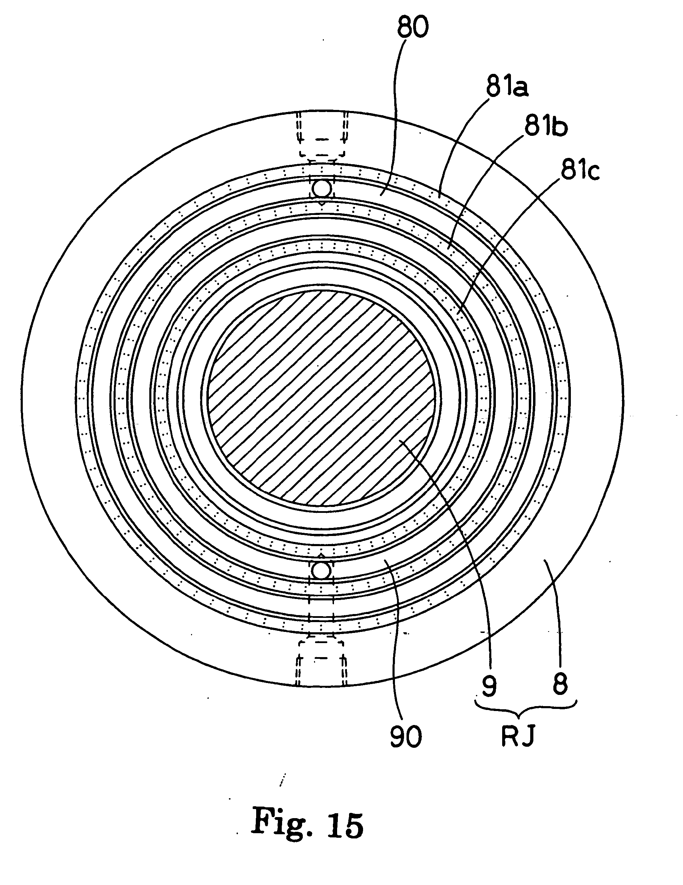

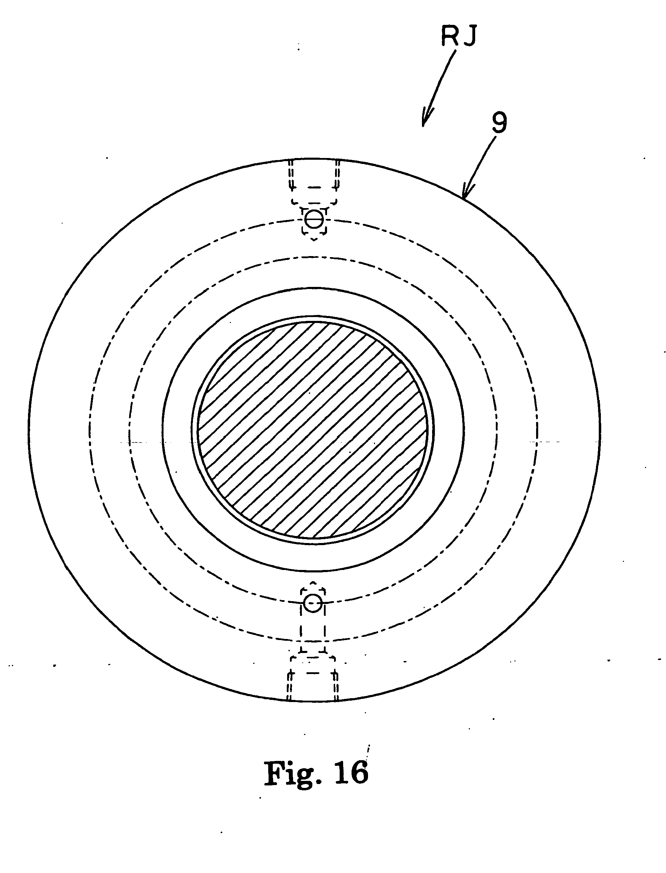

A conventional rotary joint, as shown in Figs. 11 to 13 and Figs. 14 to 16, has a fixed-side member 8 and a rotational-side member 9. Since only a single circumferential groove between rotation seals 81a and 81b allows fluid to flow in only one-way direction (from a fixed side to a rotational-side or from the rotational-side to the fixed side), in case of supplying cooling water to the rotational-side, the conventional rotary joint requires a circumferential supply groove 80 and a circumferential discharge groove 90 that is positioned off from the supply groove 80 in a longitudinal direction or a radial direction, thereby further requiring a third rotation seal 81c.

Therefore, the conventional rotary joint has problems (1) that the length in the direction of a rotation axis or the diameter in a direction perpendicular to the rotation axis becomes large, and (2) that sliding resistance between the fixed-side member and the rotational-side member is large.

It is hence an object of the present invention to provide a rotary joint which has a reduced length in the direction of a rotation axis or a reduced diameter in the direction perpendicular to the rotation axis, and in which sliding resistance between its fixed-side and rotational-side members is reduced.

US patent no. 4,858,962 discloses an articulated joint for the articulating connection of two bodies. At least two fluid pathways lead through the two jointed bodies. Each fluid path has a respective groove, with angular dimension smaller than 180 degrees, formed In the bearing surface of one of the bodies, and a passage that is formed in the bearing surface of the other body. Stops are provided to limit a degree of relative rotation permissible between the bodies, such that each passage opens into the respective groove in all possible articulated positions of the joint bodies.

### SUMMARY OF INVENTION

According to an aspect of the present invention, there is provided a rotary joint comprising:
a fixed-side member;
a rotational-side member,
a relative rotating face between the fixed-side and the rotation-side members;
two rotation seals on the relative rotating face to form a fluid-tight sealed section there between;
a first passage extending through the fixed-side member, the fluid-tight sealed section of the relative rotating face, and the rotational-side member,
a second passage extending through the rotational-side member, the fluid-tight sealed section of the relative rotating face, and the fixed-side member, the second passage being arranged at a 180-degree interval from the first passage; and
wherein the first and second passages are provided with respective grooves along the fluid-tight sealed section on the side of the fixed-side member or on the side of the rotational side-member, the grooves having an angular extent smaller than 180 degrees, and being separated by projections so that they do not interfere with each other;
and wherein the rotational-side member is rotatable relative to the fixed-side member such that it is rotatable to a position in which the projections close the first and second passages.

The rotary joint according to the present invention may further include a proximity switch on one of the fixed-side member and the rotational-side member, wherein the proximity switch is arranged to sense a state where the fixed-side member and the rotational-side member have relatively rotated to the position where the projections between the groves close the first and second passages, and outputs a signal accordingly.

### BRIEF DESCRIPTION OF DRAWINGS

Fig. 1 is a sectional view of a rotary joint according to Embodiment 1 of the present invention.
Fig. 2 is a sectional view taken along a line X - X in Fig. 1.
Fig. 3 is a front view of the rotary joint seen from a first passage side.
Fig. 4 is a side view of the rotary joint of Fig. 3.
Fig. 5 is a sectional view of a rotary joint according to Embodiment 2 of the present invention.
Fig. 6 is a sectional view taken along a line Y - Y in Fig. 5.
Fig. 7 is a sectional view of a rotary joint according to Embodiment 3 of the present invention.
Fig. 8 is a sectional view taken along a line Z - Z in Fig. 7.
Fig. 9 is a sectional view of a rotary joint according to Embodiment 4 of the present invention.
Fig. 10 is a sectional view taken along a line L - L in Fig. 9.
Fig. 11 is a sectional view of a rotary joint of a conventional example 1.
Fig. 12 is a sectional view taken along a line M - M in Fig. 11.
Fig. 13 is a sectional view taken along a line N - N in Fig. 11.
Fig. 14 is a sectional view of a rotary joint of a conventional example 2.
Fig. 15 is a sectional view taken along a line O - O in Fig. 14.
Fig. 16 is a sectional view taken along a line P - P in Fig. 14.

### DESCRIPTION OF THE PREFERRED EMBODIMENT

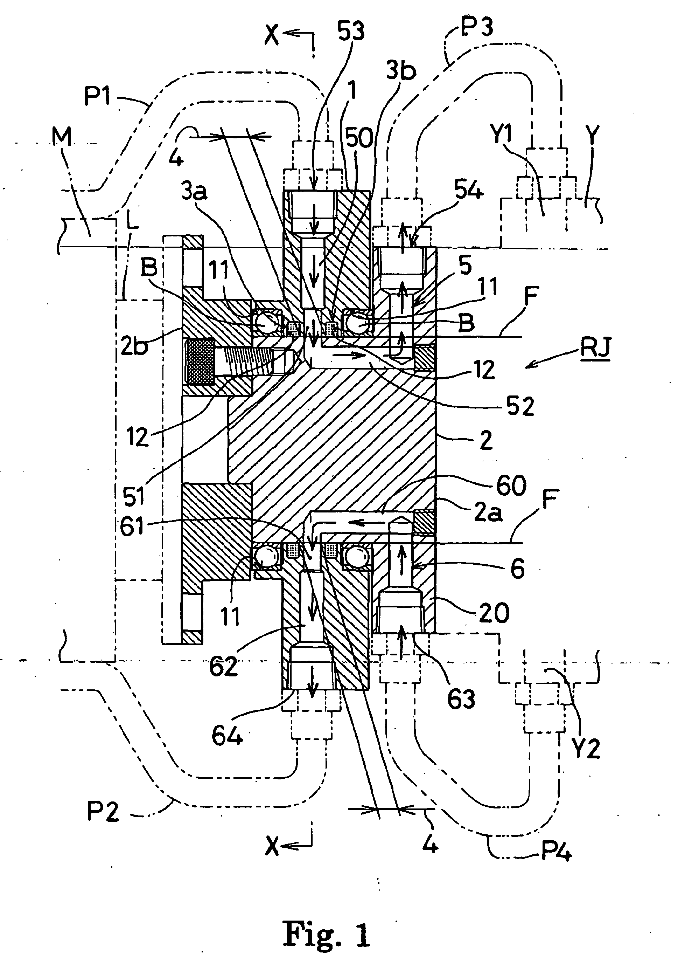

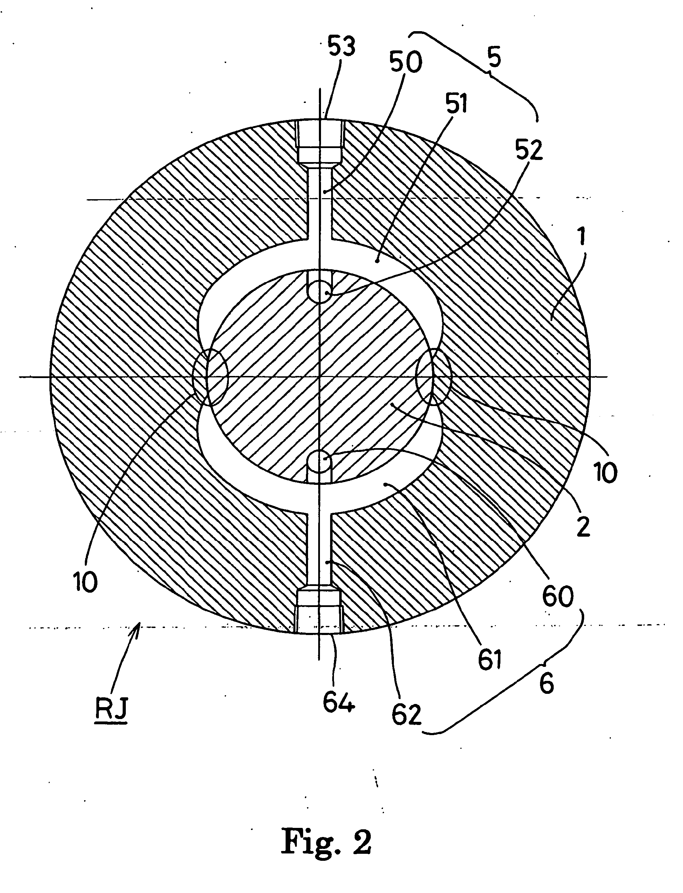

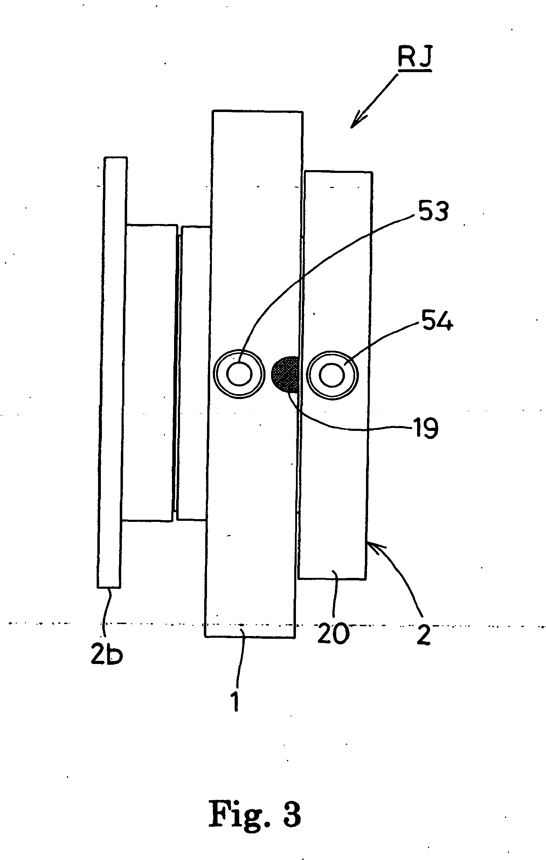

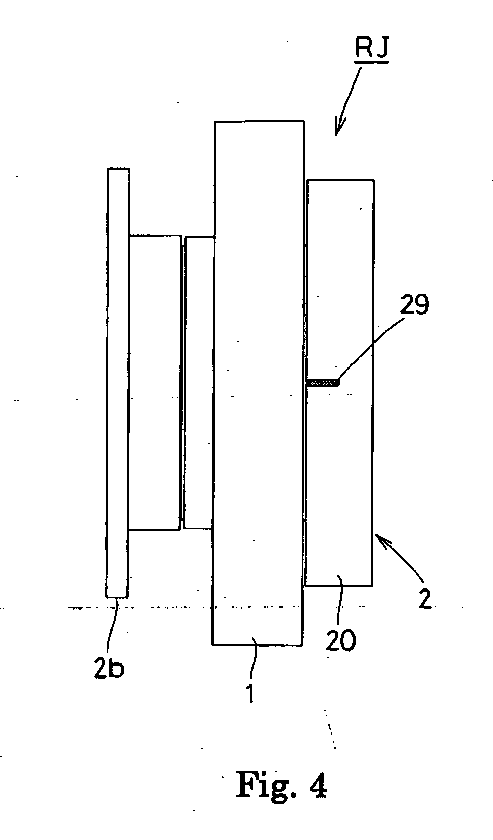

Fig. 1 shows a sectional view of a rotary joint RJ according to Embodiment 1 of the present invention, Fig. 2 shows a sectional view taken along a line X - X in Fig. 1, Fig. 3 shows a front view of the rotary joint RJ seen from a side of a first passage 5 and Fig. 4 shows a side view of the rotary joint RJ of Fig. 3.

As shown in Figs. 1 and 2, this rotary joint RJ has two rotation seals 3a and 3b on a rotating face F of a fixed-side member 1 and a rotational-side member 2 that are relatively rotatable by bearings B and B so as to form a fluid-tightly sealed portion between the seals. The rotary joint RJ is provided with a first passage 5 extending from the fixed side member 1 to the rotational-side member 2 through the fluid-tightly sealed portion 4 of the relative rotating face F and a second passage 6 extending from the rotational-side member 2 to the fixed-side member 1 through the fluid-tightly sealed portion 4 of the relative rotating face F. The first and second passages 5 and 6 are arranged at a 180-degree interval and respectively provided with grooves 51 and 61 at the side of the fixed-side member 1 or the side of the rotational-side member 2. In this embodiment, the grooves 51 and 61 are arranged along the fluid-tightly sealed portion 4 in a range slightly smaller than 180 degrees and not to interfere with each other.

The fixed-side member 1 is formed of an annular-shaped thick plate as shown in Fig. 1. On an inner peripheral surface thereof, grooves 11 and 11 are formed for receiving the bearings B and B. Between the grooves 11 and 11, another grooves 12 and 12 are formed for receiving rotation seals 3a and 3b. Further, as shown in Figs. 1 and 2, the fixed-side member 1 includes an inlet 53, a passage 50 and a groove 51 that constitute a part of the first passage 5 and an outlet 64, a passage 62 and a groove 61 that constitute a part of the second passage 6. Moreover, as shown in Fig. 2, the groove 51 branches off from the passage 50 toward left and right at an angle of 80 degrees (not limited to 80 degrees, as long as the angle is smaller than 90 degrees, and this applies hereinbelow). Similarly the groove 61 branches off from the passage 62 toward left and right at an 80-degree angle. Inward projections 10 and 10 are provided between the passages 50 and 62. As shown in Fig. 3, an outer peripheral surface of the fixed-side member 1 has a fixed-side mark 19 at a position corresponding to the inlet 53.

As shown in Fig. 1, the rotational-side member 2 has a flange 2b bolted to a body 2a having a projecting portion 20. The passage 52 and the outlet 54 that constitute a part of the first passage 5 and the inlet 63 and the passage 60 that constitute a part of the second passage 6 are respectively provided in the body 2a. On the other hand, the fixed-side member 1 is received between the projecting portion 20 and the flange 2b via an innerrace of the bearings B and B as shown in Fig. 1. Further, as shown in Fig. 4, a rotational-side mark 29 is formed on the outer peripheral surface of the projecting portion 20 at a position shifted 90 degrees from a position corresponding to the outlet 54.

The bearings B and B, as shown in Fig. 1, are made of a so-called ball bearing and received within the grooves 11 and 11.

The rotation seals 3a and 3b are received within the grooves 12 and 12 as shown in Fig. 1.

When the above-mentioned members are assembled as shown in Fig. 1, the inlet 53, the passage 50, the groove 51, the passage 52 and the outlet 54 form the first passage 5, while the inlet 63, the passage 60, the groove 61, the passage 62 and the outlet 64 form the second passage 6.

Further, in this rotary joint RJ, when the inlet 53 and the outlet 54 are aligned as shown in Fig. 3 (a state where the fixed-side mark 19 and the rotational-side mark 29 are shifted 90 degrees away from each other), the passage 52 is shifted 90 degrees away from the inward projection 10 to establish a communication among the passage 50, the groove 51 and the passage 52 and also a communication among the passage 60, the groove 61 and the passage 62. In another state where the rotational-side member 2 is rotated 90 degrees from the state shown in Fig. 3 (a state where the fixed-side mark 19 and the rotational side mark 29 are aligned), the passage 52 and the passage 62 are respectively closed with the inward projections 10.

The function and effect of this rotary joint RJ are as follows.
1. Since this rotary joint RJ has two rotation seals 3a and 3b, the length of the rotational-side member 2 in the direction of the rotation axis is decreased. Therefore, the total weight of the joint can be reduced, and when the joint is mounted on a leading wrist portion L of a manipulator M as described later, a rotation moment is reduced.
2. This rotary joint RJ has two rotation seals 3a and 3b, and therefore sliding resistance between the fixed-side member 1 and the rotational-side member 2 can be reduced.

Embodiments 3 and 4 described later also have the same function and effect as those of the foregoing rotary joint RJ.

This rotary joint RJ is used as follows.

As shown in Fig. 1, this rotary joint RJ is used when, for example, a welding machine Y is attached to the leading wrist portion L of the manipulator M. Specifically, the rotary joint RJ is attached between the leading wrist portion L and the welding machine Y. This rotary joint RJ is used for preventing the welding machine Y from heating up due to heat generated during a spot welding.

In this case, one end of the rotational-side member 2 is attached to the leading wrist portion L of the manipulator M. A supply pipe P1 and a discharge pipe p2, both being for cooling water and provided along the manipulator M, are respectively attached to the inlet 53 of the first passage 5 and the outlet 64 of the second passage 6. A cooling water supply port Y1 and a cooling water discharge port Y2, both being for the welding machine Y and provided at the other end of the rotational-side member 2, are respectively connected with the outlet 54 of the first passage 5 through a pipe P3 and with the inlet 63 of the second passage 6 through a pipe P4. This structure allows cooling water to flow in a route from the supply pipe P1 to the first passage 5, the pipe p3, the welding machine Y, the pipe P4, the second passage 6, and then the discharge pipe P2.

In the use of the welding machine Y of this type, the welding machine Y is rotated in a normal direction and the reverse direction via the rotary joint RJ. Depending on an angle between the normal and the reverse rotation of the rotary joint RJ, the following measures are required.
1. When a spot welding position is shifted to the position where the rotational-side member 2 is rotated 90 degrees from the state shown in Fig. 2, cooling water does not flow because it is blocked on the way of the flowing route (the inward projection 10 provided between the grooves 51 and 61 closes the first passage 5 and the second passage 6 and blocks the flow of cooling water). Therefore, a program is inputted so that spot welding is not allowed at this position.
2. After the passage 50 and the passage 52 have been communicating with each other during the spot welding, when the rotational-side member 2 rotates for the next spot welding to allow the passage 60 (the discharge side) to communicate with the passage 50 (the supply side) via the groove 51, cooling water that has entered the welding machine Y for cooling and heated returns again to the original passage 5. However, since it often takes relatively long time from one spot welding to another, the cooling water can be usually used as it is.

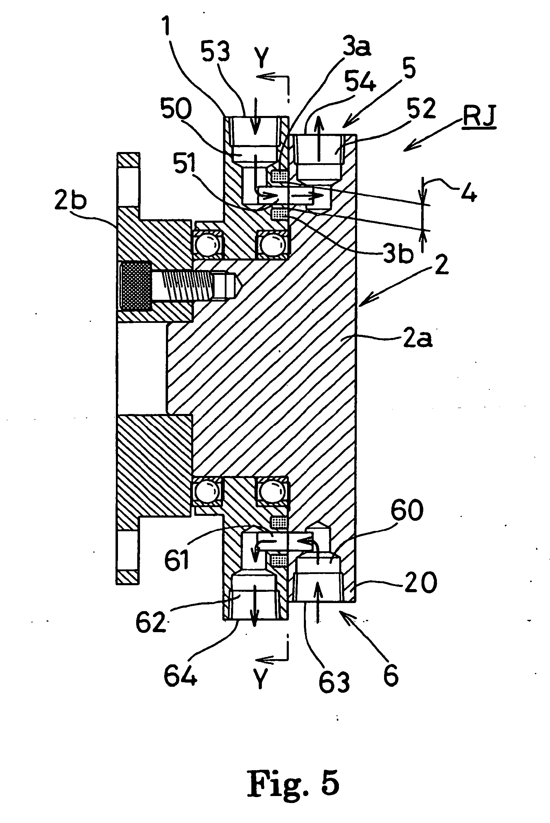

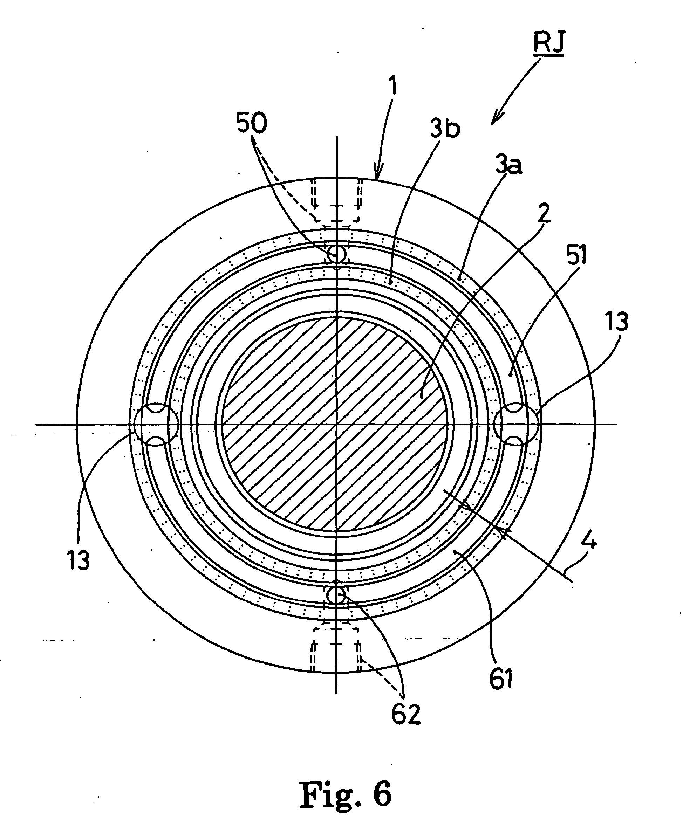

Fig. 5 is a sectional view of a rotary joint RJ according to Embodiment 2 of the present invention and Fig. 6 is a sectional view taken along a line Y - Y in Fig. 1.

The construction of this rotary joint RJ, shown in Figs. 5 and 6, is basically the same as that of Embodiment 1. However, different from Embodiment 1, a large and a small rotation seal 3a and 3b having different diameters are arranged on a surface of the fixed-side member 1 opposing to the projecting portion 20 to form a fluid-tightly sealed portion 4 therebetween. The fluid-tightly sealed portion 4 in the side of the fixed-side member 1 is provided with grooves 51 and 61 in a range slightly smaller than 180 degrees and not interfering with each other.

In this rotary joint RJ, as shown in Figs. 5 and 6 where the inlet 53 and the outlet 54 are aligned (a state where the fixed-side mark 19 and the rotational-side mark 29 are shifted 90 degrees away from each other), the passage 52 is shifted 90 degrees away from a non-grooved portion 13 between the grooves 51 and 61, and a communication among the passage 50, the groove 51 and the passage 52 as well as a communication among the passage 60, the groove 61 and the passage 62 are established. Moreover, when the rotational-side member 2 is rotated 90 degrees from the position shown in Figs. 5 and 6 (a state where the fixed-side mark 19 and the rotational-side mark 29 are aligned), the passages 52 and 62 are respectively closed by the portion 13.

The function and effect of this rotary joint RJ are described below.
1. This rotary joint RJ has two rotation seals 3a and 3b, and the diameter of the rotational-side member 2 in the direction perpendicular to the rotation axis is reduced. Therefore, the total weight of the joint can be reduced, and when the joint is mounted on the leading wrist portion L of the manipulator M as described above, a rotation moment can be reduced. 2. This rotary joint RJ has two rotation seals 3a and 3b, and sliding resistance between the fixed-side member 1 and the rotational-side member 2 can be reduced.

This rotary joint RJ is used being attached to the leading portion of the manipulator M like Embodiment 1.

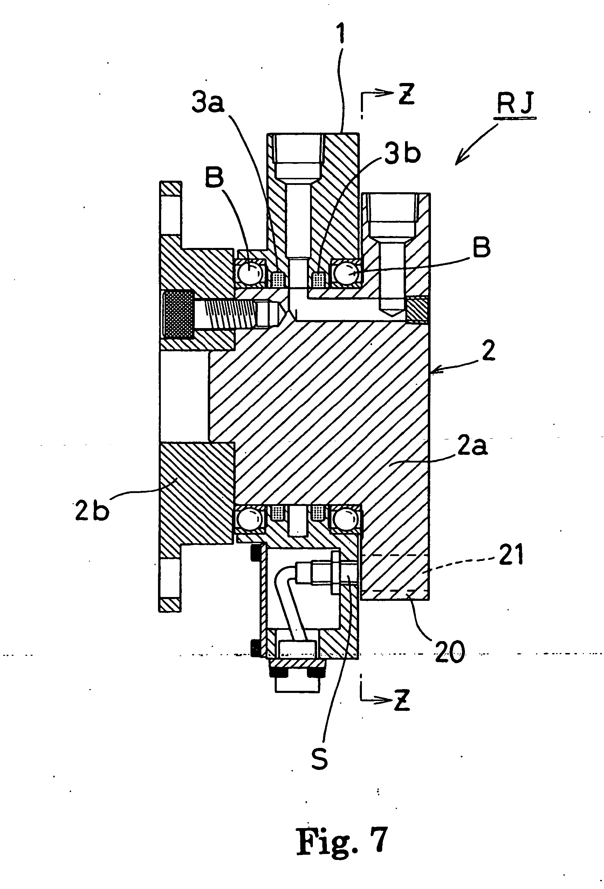

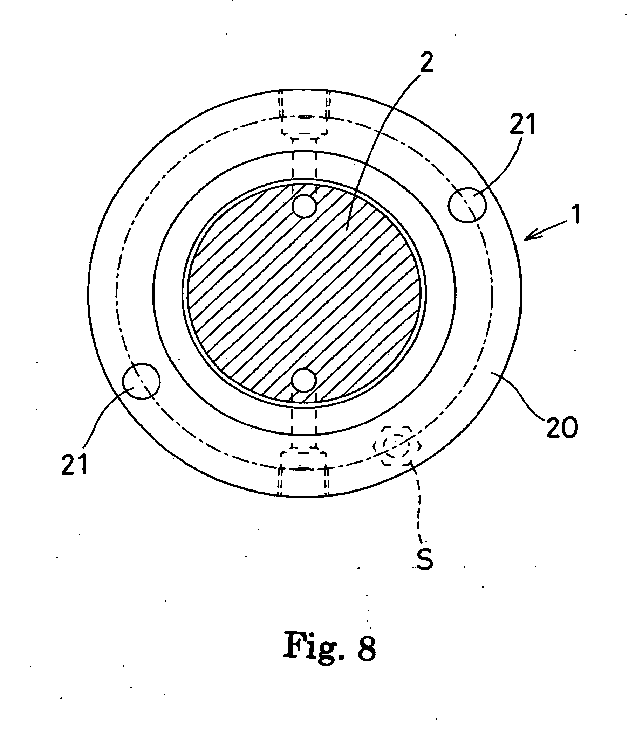

Fig. 7 shows a sectional view of a rotary joint RJ according to Embodiment 3 of the present invention and Fig. 8 shows a sectional view taken along a line Z - Z in Fig. 7.

As shown in Figs. 7 and 8, being constructed basically similar to Embodiment 1, this rotary joint RJ has a proximity switch S on the side of the fixed-side member 1 and a hole 21 (a non-detecting section) in the projecting portion 20 of the rotational-side member 2. When the fixed-side mark 19 and the rotational-side mark 29 are aligned (in a state where the passages 52 and 62 are respectively closed by the inward projection 10), the proximity switch S opposes to the hole 21 and stands in a non-detecting state.

In the rotary joint RJ of this embodiment, use of the non-detecting state of the proximity switch S allows no spot welding in the above-mentioned state.

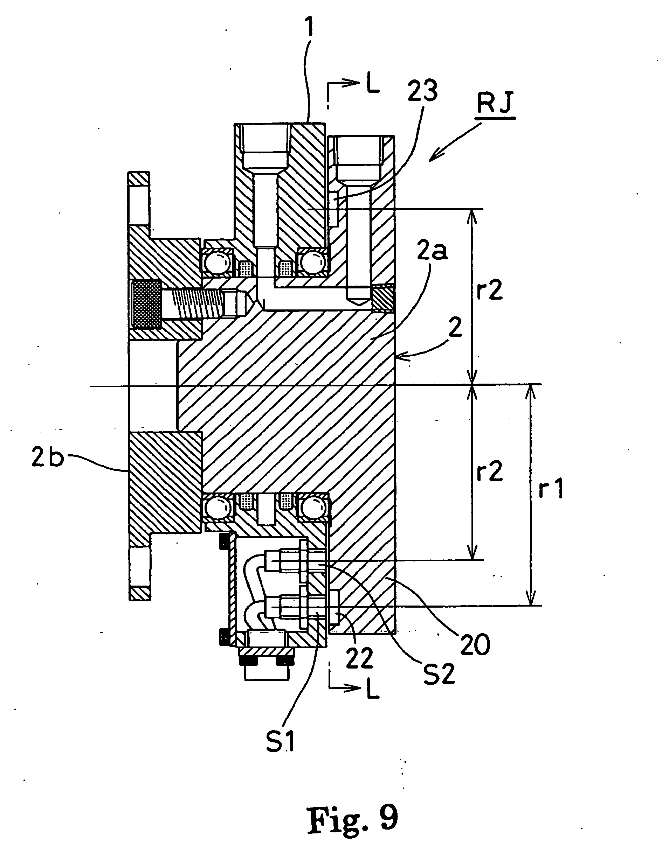

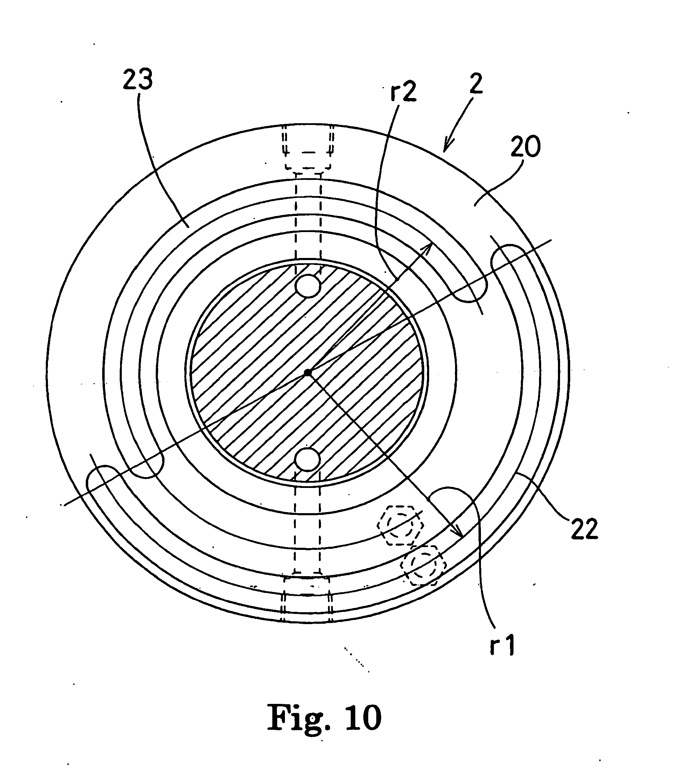

Fig. 9 shows a sectional view of a rotary joint RJ according to Embodiment 4 of the present invention and Fig. 10 shows a sectional view taken along a line L - L in Fig. 9.

As shown in Figs. 9 and 10, being constructed basically similar to Embodiment 1, the rotary joint RJ of Embodiment 4 has two proximity switches S1 and S2 arranged in a radius direction (radius r1 and radius r2) on the side of the fixed-side member 1 and arc-shaped grooves 22 and 23 having different radiuses r1 and r2 on the surface of the projecting portion 20 opposing to the fixed-side member 1. When the proximity switches S1 and S2 are respectively opposite to the arc-shaped grooves 22 and 23, they respectively become OFF (in a non-detecting state), while when the switches s1 and S2 are respectively not opposite to the arc-shaped grooves 22 and 23, they respectively become ON (in a detecting state).

In this rotary joint RJ, when the fixed-side mark 19 and the rotational-side mark 29 are aligned (a state where the passage 52 and the passage 62 are respectively closed by the inward projection 10), the proximity switches S1 and S2 both become OFF

This rotary joint RJ is controlled as described below.
1. When the state where the proximity switch S1 is OFF and the proximity switch S2 is ON is changed to another state where the proximity switch S1 is ON and the proximity switch S2 is off, or vice versa, the cooling water supply port is changed from the side of the inlet 53 to the side of the outlet 64, or vice versa.
   Therefore, in case where, after the passage 50 and the passage 52 communicate with each other through the groove 51 during spot welding, the rotational-side member 2 rotates for the next spot welding to allow the passage 60 (a discharge side) to communicate with the passage 50 (a supply side) through the groove 51, this rotary joint RJ can prevent the cooling water which has entered the welding machine Y for cooling and been heated up from returning again to the original passage 5.
   In order to have the above function, a changeover valve that changes according to the output from the proximity switches S1 and S2 may be inserted in a circuit for cooling water.
2. When the proximity switches S1 and S2 are both OFF, the joint is controlled to prevent spot welding.

As other embodiments, the grooves 51 and 61 may be provided not on the side of the fixed-side member 1 but on the side of the rotational-side member 2 in all of the above-mentioned embodiments.

Furthermore, the fixed-side member 1 in all of the above embodiments may be made as a rotational-side member and the rotational-side member 2 in all of the above embodiments may be made as a fixed-side member.

As apparent from the section of Description of the Preferred Embodiments, the present invention provides a rotary joint having a reduced length in a direction of a rotation axis or a reduced diameter in a direction perpendicular to the rotation axis, and further has a reduced sliding resistance between the fixed-side member and the rotational-side member.

## Claims

1. A rotary joint comprising:
a fixed-side member (1):
a rotational-side member (2);
a relative rotating face (F) between the fixed-side and the rotation-side members (1, 2);
two rotation seals (3a, 3b) on the relative rotating face (F) to form a fluid-tight sealed section (4) therebetween;
a first passage (5) extending through the fixed-side member (1), the fluid-tight sealed section (4) of the relative rotating face (F), and the rotational-side member (2);
a second passage (6) extending through the rotational-side member (2), the fluid-tight sealed section (4) of the relative rotating face (F), and the fixed-side member (1), the second passage being arranged at a 180-degree interval from the first passage (5); and
wherein the first and second passages (5, 6) are provided with respective grooves (51. 61) along the fluid-tight sealed section (4) on the side of the fixed-side member (1) or on the side of the rotational side-member (2), the grooves having an angular extent smaller than 180 degrees,and being separated by projections (10, 13) so that they do not interfere with each other; **characterised in that**
the rotational-side member (2) is rotatable relative to the fixed-side member, such that it is rotatable to a position in which the projections (10, 13) close the first and second passages (5, 6).

2. The rotary joint according to Claim 1, further comprising a proximity switch on one of the fixed-side member (1) and the rotational-side member (2), wherein the proximity switch is arranged to sense a state where the fixed-side member (1) and the rotation-side member (2) have relatively rotated to the position where the projections (10, 13) between the grooves (51, 61) close the first and second passages (5, 6), and outputs a signal accordingly.

## Patentansprüche

1. Drehgelenk, umfassend:
ein festseitiges Element (1);
ein drehseitiges Element (2);
eine Relativ-Rotationsfläche (F) zwischen dem festseitigen und dem drehseitigen Element (1, 2);
zwei Drehdichtungen (3a, 3b) auf der Relativ-Rotationsfläche (F), um zwischen diesen einen flüssigdichten Dichtungsabschnitt (4) auszubilden;
einen ersten Durchlass (5), der sich durch das festseitige Element (1), den flüssigdichten Dichtungsabschnitt (4) der Relativ-Rotationsfläche (F) und das drehseitige Element (2) erstreckt;
einen zweiten Durchlass (6), der sich durch das drehseitige Element (2), den flüssigdichten Dichtungsabschnitt (4) der Relativ-Rotationsfläche (F) und das festseitige Element (1) erstreckt, wobei der zweite Durchlass in einem 180-Grad-Abstand vom ersten Durchlass (5) angeordnet ist; und
worin der erste und der zweite Durchlass (5, 6) mit jeweiligen Vertiefungen (51, 61) entlang des flüssigdichten Dichtungsabschnitts (4) auf der Seite des festseitigen Elements (1) oder auf der Seite des drehseitigen Elements (2) bereitgestellt sind, wobei die Vertiefungen eine Winkelerstreckung aufweisen, die kleiner als 180 Grad ist, und durch Vorsprünge (10, 13) derart voneinander getrennt sind, dass sie sich nicht gegenseitig beeinflussen,
**dadurch gekennzeichnet, dass**
das drehseitige Element (2) relativ zum festseitigen Element (1) derart drehbar ist, dass es an eine Position drehbar ist, an der die Vorsprünge (10, 13) den ersten und zweiten Durchlass (5, 6) verschließen.

2. Drehgelenk nach Anspruch 1, ferner umfassend einen Näherungsschalter auf dem festseitigen Element (1) oder dem drehseitigen Element (2), worin der Näherungsschalter ausgebildet ist, um einen Zustand abzufühlen, in dem das festseitige Element (1) und das drehseitige Element (2) sich relativ zueinander zur Position gedreht haben, an der die Vorsprünge (10, 13) zwischen den Vertiefungen (51, 61) den ersten und zweiten Durchlass (5, 6) verschließen, und ein entsprechendes Signal ausgibt.

## Revendications

1. Joint rotatif comprenant :
un élément à côté fixe (1) ;
un élément à côté rotatif (2);
une face rotative (F) relative entre les éléments à côté fixe et à côté rotatif (1, 2) ;
deux joints d'étanchéité de rotation (3a, 3b), sur la face rotative (F) relative pour former une section étanche au fluide (4) entre eux ;
un premier passage (5) s'étendant à travers l'élément à côté fixe (1), la section étanche au fluide (4) de la face rotative (F) relative et l'élément à côté rotatif (2) ;
un second passage (6) s'étendant à travers l'élément à côté rotatif (2), la section étanche au fluide (4) de la face rotative (F) relative, et l'élément à côté fixe (1), le second passage étant agencé selon un intervalle de 180 degrés par rapport au premier passage (5) ; et
dans lequel les premier et second passages (5, 6) sont prévus avec des rainures (51, 61) respectives le long de la section étanche au fluide (4) sur le côté de l'élément à côté fixe (1) ou sur le côté de l'élément à côté rotatif (2), les rainures ayant une étendue angulaire inférieure à 180 degrés, et étant séparées par des saillies (10, 13) de sorte qu'elles n'interfèrent pas entre elles ; **caractérisé en ce que** :
l'élément à côté rotatif (2) est rotatif par rapport à l'élément à côté fixe (1) de sorte qu'il peut tourner dans une position dans laquelle les saillies (10, 13) ferment les premier et second passages (5, 6).

2. Joint rotatif selon la revendication 1, comprenant en outre un commutateur de proximité sur l'un parmi l'élément à côté fixe (1) et l'élément à côté rotatif (2), dans lequel le commutateur de proximité est agencé pour détecter un état dans lequel l'élément à côté fixe (1) et l'élément à côté rotatif (2) tournent relativement dans la position dans laquelle les saillies (10, 13) entre les rainures (51, 61) ferment les premier et second passages (5, 6) et par conséquent produit un signal.
